# EUROPÄISCHE PATENTSCHRIFT

(11) **EP 0 291 877 B1**
(45) Veröffentlichungstag und Bekanntmachung des Hinweises auf die Patenterteilung: **11.08.1993**
(21) Anmeldenummer: 88107717.6
(22) Anmeldetag: 13.05.1988
(51) Int. Cl.: C09D 191/00

(54) **Lufttrocknende Lasurfarben und Holzdeckfarben für Aussen- und Innenanstriche**
Air drying glazing compositions and wood finishing paints for outside and inside application
Glacis et peintures sur bois séchant à l'air pour applications extérieures et intérieures

(30) Priorität: 21.05.1987 DE 3717099
(43) Veröffentlichungstag der Anmeldung: 23.11.1988
(73) Patentinhaber: Ostermann & Scheiwe GmbH & Co, 48155 Münster (DE)
(72) Erfinder: Hermann, Siegbert, Dipl. Chem.-Ing.,, D-4416 Everswinkel (DE)
(74) Vertreter: Schulze Horn, Stefan, Dipl.-Ing. M.Sc.

(56) Entgegenhaltungen:
- DE-A- 2 236 190
- US-A- 2 947 713
- US-A- 4 919 721

## Beschreibung

Die Erfindung betrifft lufttrocknende Lasurfarben und Holzdeckfarben für Außen- und Innenanstriche, bestehend aus einem sogenannten Festkörper, der ein inniges Gemisch aus modifizierten Naturölen, Pigmenten, Füllstoffen und geringen Anteilen an Lackhilfsmitteln darstellt, und aus als Lösungsmittel geeignetem Benzin mit einem Anteil von ≦ 15 Gew.-%, bezogen auf die Gesamtmenge.

Es besteht der Wunsch, lufttrocknende Lasurfarben mit einem hohen Anteil an Festkörpern und einem niedrigen Anteil an flüchtigen Lösungsmitteln herzustellen. Diese Lasur- und Holzdeckfarben sollen sowohl von Laien als auch Fachleuten leicht zu verarbeiten (anstreichen, verstreichen) sein. Zur Herstellung derartiger Lasurfarben mit hohen Festkörperanteilen werden chemisch modifizierte Naturöle verwendet. Dagegen gibt es auch andere Lasuren, die lediglich auf Wasserbasis gemischt sind. Die Lasurfarben auf Naturölbasis dringen tief in ein Holz-Substrat ein. Der Anstrich quellt das Holz nicht auf, es wird vor dem Verspröden bewahrt und gegen Austrocknung geschützt. Durch das Erfordernis nur eines Auftrages ergeben sich zeit- und materialsparende Anwendungsmöglichkeiten.

Es hat sich jedoch bei der Anwendung bekannter lufttrocknender Lasurfarben in einzelnen Fällen gezeigt, daß nach dem Anstreichen die bearbeitete Holzfläche nach dem Trocknen ein "scheckiges" und fleckiges Aussehen erhält. Dieses die Oberfläche in ihrem Wert herabsetzende Aussehen ergibt sich aufgrund eines unvollständigen Eindringens der Lasurfarbe mit den Festkörper-Anteilen in das Holz. An der Oberfläche bleiben gewissermaßen Inseln von größeren Festkörperanteilen zurück, die den Anstrich als inhomogen erscheinen lassen.

Es stellt sich damit die Aufgabe, eine an der Luft trocknende Lasurfarbe für Außenanstriche anzugeben, die auch bei einem einmaligen Anstrich das Erscheinen der Scheckigkeit und Fleckigkeit vermeidet, wobei trotzdem die übrigen Eigenschaften, insbesondere der geringe Lösungsmittelanteil, ebenfalls eingehalten werden.

Diese Aufgabe wird gemäß Erfindung bei einer Lasurfarbe der eingangs genannten Art dadurch gelöst, daß das Gemisch der chemisch modifizierten Naturöle eine Konsistenz aufweist, so daß seine Auslaufzeit aus dem Meßbecher nach DIN 53 211 4 mm bei 20° C zwischen 28 und 35 Sekunden beträgt, und daß der Füllstoff aus einem feinen kryptokristallinen, amorphen Siliziumdioxid besteht, bei dem der Anteil aus Partikeln mit einer Korngröße ≦ 40 µm mehr als 95% beträgt, vorzugsweise sollte die Partikelgröße des Füllstoffes zu 99 % zwischen 2 und 20 µm betragen.

Durch entsprechende chemische Modifizierungen, wie sie dem Lackfachmann bekannt sind, lassen sich modifizierte Naturöle bzw. Naturöl-Gemische herstellen, die eine verhältnismäßig niedriger Viskosität aufweisen. Diese Viskosität resultiert dann in einer Konsistenz, die nach dem genannten Meßverfahren DIN 53 211 4 mm eine Auslaufzeit zwischen 28 und 35 Sekunden aus dem genormten Meßbecher ergibt. Durch die Messung nach DIN 53 211 4 mm wird eine Summe von Viskositätseigenschaften, wie sie für den Lackfachmann wichtig sind, ermittelt. Es handelt sich nicht um eine "wissenschaftliche" Messung, denn Geschwindigkeitsgefälle und Schubspannung können nicht berücksichtigt werden. Bekannte Holzlasuren auf Alkydharzbasis haben beispielsweise bei 20° C eine Durchlaufzeit von 14 Sekunden (vgl. Brasholz, "Handbuch der Anstrich- und Beschichtungstechnik", Bauverlag GmbH, Wiesbaden und Berlin, 1978; Seite 209).

Bei der Herstellung von modifizierten Naturölen und/oder Naturölgemischen werden unterschiedliche Substanzen physikalisch, z. B. Kochen, behandelt, wobei auch chemische Reaktionen ablaufen. Als Substanzen dienen verschiedene Naturöle, wie Leinöl, Sojaöl, Ricinenöl, Fischöl (Tranöl), Tallöl, Holzöl und Saffloröl. Diese verschiedenen Naturölsorten, die sich sowohl bezüglich ihrer Zusammensetzung als auch bezüglich ihrer Herkunft unterscheiden, sind problemlos miteinander mischbar.

Um diese Öle verstreichen zu können und um sicherzustellen, daß Lasuren auch in das Holz teilweise eindringen, wird zusätzlich ein Verdünner hinzugegeben, der ein Testbenzin, Benzol, Terpenkohlenwasserstoff, Ester, Keton oder Alkohol sein kann.

Pigmente werden den Lasurfarben hinzugegeben, um dem Lack einen spezifischen Farbton zu verleihen und um die Empfindlichkeit gegenüber ultraviolettem Licht zu senken, damit der Vergilbungseffekt möglichst gering gehalten wird. Weitere Lackhilfsmittel, sogenannte Sikkative werden z. B. Dispergierungs-Stoffe, Stabilisatoren, Trocknungsbeschleuniger und Antiabsetzmittel sein. Als Trocknungsmittel werden Metalle wie Kobalt, Blei, Calcium, Barium und Zink verwandt, die als Ion zusammen mit einem Oktoat vorliegen.

Für die Naturöle werden Substanzen verwandt, die aus pflanzlichen oder tierischen Produkten gewonnen werden.

Diese Öle werden nun in einem viele Stunden dauernden Prozeß physikalisch behandelt, wobei gleichzeitig auch kontrollierte chemische Reaktionen ablaufen. Die Naturöle werden erhitzt und innig miteinander vermischt. Als chemische Reaktion findet zuerst eine Oxidation einiger Doppelbindungen statt, so daß anstelle der Doppelbindung eine Hydroxylgruppe und daneben ein Wasserstoffatom angelagert wird. In einer zweiten Reaktion werden Hydroxylgruppen mit Säuren oder deren Salzen verestert. Da die Viskosität eines modifizierten Naturöles von der Anzahl der Doppelbindungen und der Anzahl der Esterverbindungen abhängt, ist somit eine Steuerung der Oxidation und der Veresterung erforderlich. Der Großteil der Verarbeitungszeit erfolgt daher unter Sauerstoffabschluß, indem ein Verarbeiten und Rühren in einer Stickstoffatmosphäre vorgenommen wird.

Die Zusammensetzungen und die Verarbeitungen von modifizierten Naturölen beruhen auf Rezepturen und Vorschriften, die den Fachleuten vertraut sind.

Es ist bekannt, als Füllstoffe anorganische Siliziumverbindungen wie Kieselgele, Kieselgur und dergleichen zuzusetzen. Diese Stoffe haben sich jedoch als Füllstoffe für den vorgenannten Zweck nicht bewährt. Überraschenderweise hat sich herausgestellt, daß feine, kryptokristalline amorphe Siliziumdioxide aus natürlichen Lagerstätten vorhanden sind, die den erwünschten Effekt erbringen. Bei den genannten Siliziumdioxiden handelt es sich um solche, die beispielsweise Feinst-Scheuermitteln hinzugefügt werden. Diese Stoffe haben abrasive Eigenschaften. Es konnte nicht vorausgesehen werden, daß sie sich spezielle auch für die Herstellung von lufttrocknenden Lasurfarben und Holzdeckfarben eignen, bei denen ein einmaliger Farbauftrag eine ausreichende, homogene Farb-Anstrichoberfläche ergibt.

Typische Eigenschaften derartiger Silicate sind:
Erscheinung: Feines weißes Pulver
Dichte: 2,65
Brechnungsindex: 1,54 - 1,55
Reflektionskoeffizient: 88,5 - 90,5
Ölzahl: 29 - 31
Härte nach Mohs: 6,5
Partikelanteil für Teilchen < 40 µm: 99,0 - 100 %.

Die Stoffe werden als Mineral gefunden und gegebenenfalls durch ein Mahlverfahren entsprechend verkleinert.

Selbstverständlich können die Lasurfarben und Holzdeckfarben, die die Eigenschaften von Außenanstrichfarben besitzen, als Innenanstrichfarben verwendet werden, wenn keine toxischen Stoffe in der Farbe vorhanden sind.

Zur Erläuterung der Erfindung werden zwei Beispiele dargestellt.

### Beispiel 1

Es sollen 100 Teile schwarze, lufttrocknende Lasurfarbe hergestellt werden. Hierzu wird ein Gemisch aus 1,5 Teilen Flammruß mit 17 Teilen des genannten kryptokristallinen, amorphen Siliziumdioxides unter Zusatz von Pigmentnetzmitteln in einer Kugelmühle vermahlen und gemischt. Das aus der Kugelmühle auslaufende Gemisch wird mit einem urethanisierten Gemisch aus 60 % Leinöl und 40 % Sojaöl versetzt, das auf eine Konsistenz entsprechend einer Auslaufzeit von 30 - 32 Sekunden aus einem Meßbecher gemäß DIN 53 211 4 mm bei 20° C eingestellt ist, versetzt. Zusätzlich wird als Lösungsmittel Testbenzin hinzugefügt, so daß das Gemisch aus folgenden Teilen besteht:

| | |
|---|---|
| Pigment/Füllstoff: | 18,5 Teile |
| Ölgemisch: | 60 Teile |
| Benzin: | 15 Teile. |

Der Rest stellt Lackhilfsmittel (Antiabsetzmittel, Trocknungsbeschleuniger, Pigmentnetzmittel und dergleichen) dar, wie sie für die Lackherstellung bekannt sind.

Die vorgenannten Teile werden innig gemischt und in entsprechenden Gebinden abgefüllt.

### Beispiel 2

Herstellung von 100 Teilen Lasurfarbe in grünem Farbton.

Ein Gemisch aus 2,5 Teilen Chromoxidgrün mit 16,5 Teilen eines Füllstoffes aus einem feinen kryptokristallinen, amorphen Siliziumdioxid unter Hinzufügung von Pigmentnetzmittein wird innig in einem Dissolver gemischt, wobei in der zweiten Phase der Vermischung 60 Teile eines langöligen Leinöl-Firnisses mit einer Konsistenz hinzugefügt werden, bei der eine Auslaufzeit aus dem Meßbecher nach DIN 53 211 4 mm bei 20° C zwischen 28 und 30 Sekunden gemessen wird. Übliche Lackhilfsmittel, wie unter Beispiel 1 genannt, werden in einem Anteil von 7 % hinzugefügt. Außerdem wird Lackbenzin als Lösungsmittel in einem Anteil von 14 Gew.-% beigemischt.

Damit ergeben sich folgende Anteile:
2,5 % Chromoxidgrün
16,5 % Siliziumdioxid
60 % Ölgemisch
7 % Lackhilfsmittel
14 % Lösungsmittel.

Alle vorgenannten Anteile sind Gew.-%. Die Verarbeitungstemperatur für beide Beispiele beträgt 20° C, d. h. übliche Zimmertemperatur.

Die Einstellung der Viskosität für die chemisch modifizierten Naturöle lassen sich auf verschiedene Arten bewerkstelligen, die dem Lackfachmann bekannt sind.

## Patentansprüche

1. Lufttrocknende Lasurfarben und Holzdeckfarben für Außen- und Innenanstriche, bestehend
aus einem sogenannten Festkörper, der ein inniges Gemisch aus modifizierten Naturölen, Pigmenten, Füllstoffen und geringen Anteilen an Lackhilfsmitteln darstellt, und
aus als Lösungsmittel geeignetem Benzin mit einem Anteil von ≦ 15 Gew.-%, bezogen auf die Gesamtmenge,
**dadurch gekennzeichnet,**
daß das Gemisch der chemisch modifizierten Naturöle eine Konsistenz aufweist, so daß seine Auslaufzeit aus dem Meßbecher nach DIN 53 211 4 mm bei 20° C zwischen 28 und 35 Sekunden beträgt, und
daß der Füllstoff aus einem feinen kryptokristallinen, amorphen Siliziumdioxid besteht, bei dem der Anteil aus Partikeln mit einer Korngröße ≦ 40 µm mehr als 95% beträgt.

2. Lasurfarbe nach Anspruch 1, dadurch gekennzeichnet, daß die Partikelgröße des Füllstoffes zu 99 % zwischen 2 und 20 µm liegt.

## Claims

1. Air drying glazing components and wood finishing paints for outside and inside application, consisting of a so-called non volatile matter which is an intimate mixture of modified natural oils, pigments, fillers, and small portions of varnish auxiliaries, and a petrolether suitable as a solvent with a percentage of ≦ 15 % by weight in relation to the total amount,
**characterized in,**
that the mixture of the chemically modified natural oils consists a consistency such, that the flow time thereof out of a measuring cup according to DIN 53 211 4 mm is between 28 and 35 sec. at 20°C and that the filler consists of a fine cryptocrystalline amorphous silicon dioxide wherein the portion of particles with a particle size of ≦ 40 µm is above 95 %.

2. Glazing component according to claim 1, characterized in that, the particle size of 99 % of the filler is between 2 and 20 µm.

## Revendications

1. Glacis et peintures pour bois séchant à l'air pour applications extérieures et intérieures, se composant de
ce que l'on appelle des matières non volatiles, qui représentent un mélange intime d'huiles naturelles modifiées, de pigments, de matières de charge, et de faibles teneurs en adjuvants de peinture, et
d'un naphta approprié comme solvant, à une teneur ≦ 15 % en poids rapportée à la quantité totale,
caractérisés en ce que
la consistance du mélange des huiles naturelles modifiées chimiquement est telle que son temps d'écoulement, hors du gobelet gradué selon la norme DIN 53 211 4 mm, à 20°C est compris entre 28 et 35 secondes, et
en ce que la matière de charge se compose d'un dioxyde de silicium amorphe cryptocristallin fin, dans lequel la teneur en particules d'une granulométrie ≦ 40 µm est supérieure à 95%.

2. Glacis selon la revendication 1, caractérisé en ce que la dimension des particules de la matière de charge est comprise, pour 99% d'entre elles, entre 2 et 20 µm.
